# EUROPEAN PATENT SPECIFICATION

(11) **EP 2 771 305 B1**
(45) Date of publication and mention of the grant of the patent: **02.10.2019**
(21) Application number: 12780182.7
(22) Date of filing: 26.10.2012
(51) Int. Cl.: C04B 28/10, B09B 3/00, B28B 7/44

(54) **METHOD FOR PRODUCING A BONDED ARTICLE COMPRISING A PRESS-MOULDED, CARBONATED GRANULAR MATERIAL**
VERFAHREN ZUR HERSTELLUNG EINES GEBUNDENEN, KARBONATISIERTEN ARTIKELS MIT EINEM PRESSGEFORMTEN, KÖRNIGEN MATERIAL
PROCÉDÉ DE PRODUCTION D'ARTICLE LIÉ COMPORTANT UN MATÉRIAU GRANULAIRE CARBONATÉ, MOULÉ EN PRESSE

(30) Priority: 26.10.2011 EP 11186798
(43) Date of publication of application: 03.09.2014
(73) Proprietor: Carbstone Innovation NV, 3600 Genk (BE)
(72) Inventor: VAN MECHELEN, Dirk, B-2830 Tisselt (BE); QUAGHEBEUR, Mieke, B-2390 Malle (BE); NIELSEN, Peter, B-1560 Hoeilaart (BE)
(74) Representative: Gevers Patents
(86) International application number: PCT/EP2012/071300
(87) International publication number: WO 2013/060870

(56) References cited:
- WO-A1-94/27797
- WO-A2-2009/133120
- DD-A- 86 992
- JP-A- 2010 064 902
- US-A- 4 117 060
- US-A1- 2010 201 022
- KNOPF F C ET AL: "HIGH-PRESSURE MOLDING AND CARBONATION OF CEMENTITIOUS MATERIALS", INDUSTRIAL & ENGINEERING CHEMISTRY RESEARCH, AMERICAN CHEMICAL SOCIETY, US, vol. 38, no. 7, 1 January 1999 (1999-01-01), pages 2641-2649, XP001015402, ISSN: 0888-5885, DOI: 10.1021/IE980705Y
- DE SILVA P ET AL: "Carbonate binders: Reaction kinetics, strength and microstructure", CEMENT AND CONCRETE COMPOSITES, ELSEVIER APPLIED SCIENCE, BARKING, GB, vol. 28, no. 7, 1 August 2006 (2006-08-01) , pages 613-620, XP024963476, ISSN: 0958-9465, DOI: 10.1016/J.CEMCONCOMP.2006.03.004 [retrieved on 2006-08-01]

## Description

The present invention relates to a method for producing a bonded article by press-moulding and carbonating a granular, carbonatable material.

There are different industrial production processes which produce carbonatable materials as by-products. These by-products are for example fly ashes, bottom ashes (in particular municipal waste incineration bottom ashes) and slags generated during the production of phosphorus or during the production of ferrous or non-ferrous metals, such as zinc, copper and lead and iron or steel. Some of these by-products can be used in different applications. Blast furnace slags can be used for example in road construction and also in the production of cement. Some slags, such as common steel slags (for example LD slags) which have a high neutralizing value can for example also be used as a soil conditioning material. Other materials, such as bottom ashes and stainless steel slags contain however considerable amounts of heavy metals which are problematic in view of their leaching behaviour.

In order to limit the impact, both economic and environmental, of these domestic and industrial waste materials, attempts have been made more and more to develop methods of processing these materials, i.e. methods for converting these waste materials into economically valuable materials. A large quantity of these waste materials is alkaline and comprises carbonatable substances, such as calcium oxides and/or hydroxides and magnesium oxides and/or hydroxides. It is known that the carbonation of these substances, in particular calcium hydroxide, makes it possible to obtain materials having good mechanical qualities. Moreover, carbonation may also help in preventing leaching of pollutants such as heavy metals.

It has for example been proposed, in WO-A-2007/096671, to proceed with an accelerated carbonation of waste in a rotary drum in order to produce a secondary granulate that can serve as a construction material. A similar process has been proposed for waste from the extraction or processing of metals in WO-A-2009/024826. In the materials obtained by these processes, the carbonation of lime, present in the waste, forms a calcareous matrix ensuring both less leaching of the heavy metals contained in the waste, and greater mechanical strength.

Stainless steel slags are a particular group of slags which contain large amounts of chromium and often also of nickel. As disclosed in EP-B-0837043, EP-B-1055647 and in EP-B-1146022 the leaching problems of stainless steel slags can be solved by applying the coarser fractions of the crushed slags in bounded applications, for example as fine or coarse aggregate in concrete or asphalt. However, due to its higher gamma dicalcium silicate (γ-C2S) content, the finer fraction of these crushed steel slags has a high water absorption and is thus not suitable for being used in concrete or asphalt applications. To reduce this water absorption, WO 2009/090219 proposes to aggregate and subsequently carbonate the fine fraction of the crushed stainless steel slags.

Another carbonation method for producing more valuable construction materials starting from granular carbonatable materials, in particular from the fine fraction of crushed stainless steel slags, is disclosed in WO-A-2009/133120. In this method the granular material is first compacted in a mould, under a relatively high pressure of between 5 and 65 MPa, and the obtained compact is subsequently carbonated under a relatively high temperature and pressure so that not only the oxides and hydroxides are carbonated but also some of the silicates. In this way, carbonated compacts with a relatively high compressive strength can be produced. By controlling the porosity and the intrinsic permeability of the compacts, and by carbonating for several hours (more particularly for 18 hours at an increased pressure and temperature), compressive strengths of between 26 and 66 MPa were obtained with a 0 - 500 µm fine stainless steel slag fraction which was compacted under a compaction pressure of 182 kg/cm² (= 17.8 MPa). A drawback of this prior art method is that, notwithstanding the fact that relatively small blocks were carbonated (62x62x32 mm and somewhat larger blocks of 120x55x46 mm) and that high temperatures and pressures were used, it took a long time to achieve the required strength by carbonation of these blocks. Moreover, an installation for carbonating under a high pressure involves a high capital outlay as large, high pressure containers are required.

It is known that generally higher compressive strengths can be obtained when compacting a granular material to a higher bulk density, i.e. by reducing the porosity thereof. This appears for example from the article "Development of large steelmaking slag blocks using a new carbonation process" of T. Isoo et al. in Advances in Cement Research, 2000, 12, No. 3, July, 97-101. From the graph illustrating the relationship between the bulk density of a compact made of a granular slag material and the compressive strength of this compact after carbonation for 6 days, it appears that the compressive strength of the carbonated compact initially increases with an increase of the bulk density of the compact before carbonation. However, after having reached an optimum, a further increase of the bulk density leads to a reduced compressive strength, notwithstanding the fact that the compact was of a relatively small size (i.e. a cylinder with a diameter of 10 cm and a height of 20 cm) and that the carbonation step was performed for 6 days. An optimum compaction pressure was also described in the review article "A review of accelerated carbonation technology in the treatment of cement-based materials and sequestration of CO2" of M. Fernández Bertos et al. in Journal of Hazardous Materials B112 (2004) 193-205. The tests described in this article were done with water-cement mixtures which were compacted under increasing compaction pressures of upto a value higher than 1800 kg/cm². The obtained compacts were subsequently carbonated. When the compaction pressure increased the porosity and permeability of the solid decreased. At lower compaction pressures this led to greater strength development. At higher compaction pressures, the low porosity inhibited diffusion of the CO₂ in the compacts. Thus, the amount of precipitated CaCO₃ was lower, resulting in lower strength development.

JP 2010064902 discloses a method wherein stone powder is mixed with slaked lime and wherein this mixture is compression moulded, under a pressure of between 100 and 200 Mpa, into a compact that is subsequently carbonated. Accelerated carbonation is carried out with a gas containing 6% of carbon dioxide for a period of 10 days. Due to this accelerated carbonation of the slaked lime, and due to the fact that the slake lime is a binder present between the particles of the stone powder, quite high compression strengths could be achieved. A drawback is however again that, notwithstanding the use of a lime binder, the accelerated carbonation takes a long time to achieve the required strenght due to the reduced porosity as a result of the high compaction pressures applied to produce the compacts. US4117060 discloses the moulding of concrete articles by compressing a concrete and vinyl-acetate-butyl maleate copolymer mix in a carbon dioxide atmosphere. US2010201022 discloses a manufacturing method of tiles. WO9427797 discloses a concrete product casting method with speeded up hardening that involves adding carbon dioxide to concrete mix while compacting mix in slide casting machine.

A problem of the prior art carbonation methods is thus that when high compaction pressures are applied to achieve immediately compact with a sufficiently high "green" strength, those compacts have to be carbonated for a quite long time, and preferably at a high pressure, due to the reduced porosity of the compacts whereas when the compaction pressure is kept relatively low in view of the subsequent carbonation step, the obtained compacts again have to be carbonated for a considerable period of time, also when carbonating at higher pressures and temperatures, in order to achieve the desired mechanical strength starting from the relatively low mechanical "green" strength of the compacts.

An object of the present invention is to provide a new method for producing articles comprising a press-moulded, carbonated granular material which enables to achieve already a relatively high compressive strength in a considerably shorter period of time.

To this end, the method according to the present invention is characterised in that the granular material is applied in a mould, is brought in contact in said mould with a gas which contains at least 1 vol.% of carbon dioxide and is subsequently press-moulded in said mould under a compaction pressure of at least 25 Mpa in the presence of said gas so as to be carbonated during said press-moulding step and where said granular material comprises slag from metal production processes, slag from the production of phosphorous, bottom ash and/or fly ash, the granular material preferably comprises steel slag, in particular stainless steel slag.

By press-moulding the carbonatable, granular material under such high compaction pressures, a compact is first of all obtained which has already as such a high compressive strength (green strength). This may possibly be explained by certain mineralogical changes which were found to occur in the granular material and which may be due to metamorphism as a result of the high pressures at the contact points between the particles/grains of the granular material. In this respect, the present inventors have found that for example portlandite crystals partially dissolved under high compaction pressures. Moreover, maybe other crystals such as calcite crystals may also dissolve under high compaction pressures and re-solidify to form new (high-pressure) phases adhering the particles of the granular material to one another. Also without dissolving, at the contacts between mineral grains, the high pressure may break the bonds between atoms allowing them to migrate toward regions of less pressure where they rebind with other atoms.

An essential feature of the present invention is that carbon dioxide is provided in the granular material before press-moulding it so that the granular material is carbonated when it is subjected to the high compaction pressure during the press-moulding step. It was found that it this way a quick carbonation, or in other words a quick increase of the compression strength of the press-moulded article, could be obtained notwithstanding the reduced porosity of the article as a result of the high compaction pressure. It was found that at higher compaction pressures the increase of the compression strenght as a result of the simultaneous carbonation of the granular material was even higher than the increase of the compression strength observed at lower compaction pressures. Synergetic effects thus apparently arise between the high-pressure press-moulding process and the carbonation process since under such high pressure conditions a higher increase of the compressive strength is obtained by the carbonation in a very short period of time, i.e. within the time needed to press-mould the article. At the moment it is not yet clear how these synergetic effects can be explained. Maybe they are due to the fact that certain crystals dissolve partially under the high compaction pressures, or maybe the high contact forces between the particles of the granular material cause a very close contact between these particles so that the carbonates produced by the carbonation can more effectively/strongly adhere those particles to one another.

Carbonation of cementitious materials in the forming mould is already known per se from US 6 387 174 or from the corresponding article of Knopf F. C. et al. "High-pressure Molding and Carbonation of Cementious Materials" in Ind. Eng. Chem. Res. 1999, 38, 2641-2649. The carbonation treatment disclosed herein is intended to reduce the permeability of cement. The cementitious material is mixed with a relatively large amount of a sodium hydroxide solution so that a paste is obtained and so that the cementitious material sets within a short period of time. Supercritical or near-supercritical CO₂ is introduced in a mould which is hermetically sealed by means of a piston. The CO₂ is pressurized in the mould by lowering the piston. In the examples, a pressure of 13.8 or 13.6 MPa was exerted in this way onto the CO₂. The moulding/carbonation process took 2 or 3 hours and was found to be more reliable and effective than a post-moulding treatment of the concrete with high pressure CO₂.

An important difference with the method according to the present invention is that considerably lower pressures are applied in the mould and that these pressures are moreover not applied onto the granular material itself but instead onto the CO₂ introduced above the granular material in the mould. Since the mechanical strength of the moulded articles results mainly from the hydraulic reactions of the cementitious material, no effect of the carbonation treatment on the strength of the moulded articles has been described.

In an advantageous embodiment of the method according to the present invention the granular material has, after being applied in said mould but before being press-moulded therein, a porosity of P vol.% and a water content of W vol.%, W being smaller than P, preferably smaller than 0.9 x P, more preferably smaller than 0.8 x P and most preferably smaller than 0.7 x P.

Due to the fact that the water content of the granular material is smaller that the porosity thereof, the granular material contains open pores, i.e. pores which are not filled with water, so that gases such as carbon dioxide gas can easily penetrate into the pores of the granular material.

In a further advantageous embodiment of the method according to the present invention said gas is allowed to penetrate into said granular material before said press-moulding step.

In this embodiment, the pores of the granular material contain already an amount of carbon dioxide gas, either in the gas phase or dissolve in the water contained in the pores, so that this gas can readily react during the press-moulding step to produce carbonates adhering the particles of the granular material, which are strongly pressed against one another by the high compaction pressure, effectively to one another.

In a preferred embodiment of the method according to the present invention gas and/or liquid is allowed to escape out of said granular material during said press-moulding step, the mould being in particular provided with one or more outlet openings for said gas and/or liquid.

An advantage of this embodiment is that when the granular material contains such an amount of water that during the press-moulding step the pores would be completely filled therewith as a result of the reduced porosity, this water will be expelled from the granular material so that the high contact pressures arising between the particles of the granular material are not reduced by the water pressure that prevails within the pores of the compacted granular material.

In a further preferred embodiment of the method according to the present invention the granular material is compacted and carbonated during said press-moulding step to such an extent that the bonded article obtained by this press-moulding step has a compressive strength, measured in accordance with the Belgian standard NBN B 15-220, of at least 3 MPa (so that the articles have a sufficiently high green strength for handling them), preferably of at least 5 MPa, more preferably of at least 10 MPa and most preferably of at least 15 MPa. By using a sufficiently high compaction pressure, and by selecting a granular material (which may be a mixture of granular materials) with an appropriate particle size distribution it is possible to obtain press-moulded carbonated articles having a compressive strength which is higher than 25 MPa or even higher than 35 MPa.

In an advantageous embodiment of the method according to the present invention the press-moulded article is further carbonated by bringing it into contact with a further gas which contains at least 1 vol.% of carbon dioxide. In this way a higher compressive strength can be achieved. It was found that the gain in compressive strength by carbonating the granular material already during the press-moulding step, could be maintained during the subsequent carbonation step, and could thus result in a higher final compressive strength.

The present invention also relates to a bonded article which comprises a press-moulded, carbonated granular material and which is made by a method according to the invention.

Other particularities and advantages of the invention will become apparent from the following more detailed description of some particular embodiments. The reference numerals used in this description relate to the annexed drawings wherein:
Figure 1A represents the particle size distribution (particle size occurrence in % by volume) versus the particle size (µm) of three samples of the fine 0-500 µm fraction of stainless steel slag (R1, R2 and R3);
Figure 1B represents the corresponding cumulative values (% by volume) versus the particle size (µm);
Figure 2 represents schematically a cross-sectional view of a mould which can be used in the method of the present invention;
Figure 3 represents XRD diffraction patterns of the stainless steel slag compacts obtained in Experiment 1; and
Figures 4 to 6 are, on an enlarged scale, portions of the XRD diffraction patterns of Figure 3, showing respectively the calcite content and the two portlandite contents.

The present invention generally relates to a method for producing a bonded article by press-moulding and carbonating a granular, carbonatable material.

The expression "granular material" refers to any material which consists of loose particles. These particles may be of different sizes so that the expression "granular material" not only embraces coarse or fine granulates but also very fine granulates, in particular powders. The granular material applied in the method according to the present invention has however preferably such a particle size, or particle size distribution, that at least 50 vol.% of the granular material has a particle size smaller than 2 mm, preferably smaller than 1 mm and more preferably smaller than 0.5 mm. On the other, at least 50 vol.% of the granular material has preferably a particle size larger than 15 µm, more preferably larger than 20 µm and most preferably larger than 25 µm. In practice it is possible that the particles of the granular material adhere to one another to form more or less solid clumps (for example as a result of carbonation during a weathering or aging period). When determining the particle size of the granular material, these lumps have however to be crushed again to the initial granulometry since the particles in these lumps adhere only with a force to one another which is very small compared to the compaction pressure to which the granular material will be subjected during the press-moulding process.

The granular material may consist of one particular material or may consist of a mixture of granular materials. The granulometry of the granular material, or of the mixture of granular materials, may be selected to achieve a high packing density, or in other words a small porosity, in order to increase the strength of the bonded article produced therefrom.

The granular, carbonatatable material is preferably a byproduct or a waste product. It has a pH of at least 8.3. The pH of the granular material is defined as the pH of demineralised water wherein the granular material has been immersed for 18 hours in a liquid/solid ratio of 4.5. The carbonatable material may contain different crystalline and amorphous phases and preferably contains at least one alkaline earth metal silicate phase, in particular crystalline dicalcium silicate.

The granular material preferably comprises calcium oxide and/or calcium hydroxide, the total amount of calcium oxide and calcium hydroxide being preferably at least 1% by dry weight, more preferably at least 2% by dry weight. It may also contain magnesium oxide and/or magnesium hydroxide. These oxides and hydroxides may be in an amorphous and/or in a crystalline form, in particular in the form of portlandite (Ca(OH)₂), free lime (CaO), brucite (Mg(OH)₂) and in the form of periclase (MgO). Initially, as they are often produced under high temperatures, the freshly produced carbonatable materials usually contain no hydroxides but only oxides, the hydroxides being formed upon aging (weathering) of the carbonatable material. As the air also contains a small amount of carbon dioxide, upon aging of the carbonatable material a portion of the hydroxides is further transformed into carbonations (by natural carbonation).

A wide variety of carbonatable materials is suitable for being processed in accordance with the method according to the present invention. Suitable carbonatable materials are for example bottom ashes, more particularly bottom ashes produced during the incineration of waste, in particular of municipal waste (i.e. municipal waste incineration bottom ashes). Also fly ashes can be carbonated, in particular non-coal fly ashes. Most preferred carbonatable materials are however slag materials resulting from metal production processes (production of pig iron, steel, stainless steel and production of non-ferrous metals such as copper and zinc) and from the production of phosphorus. The used carbonatable material is preferably a non-hydraulic, or substantially non-hydraulic material. Since such a carbonatable material cannot provide as such a settable matrix by reaction with water (in particular by CSH formation), a solid article can be produced by carbonation of this material. During this carbonation, there is no competition between the carbonate formation and CSH (calcium silicate hydrate) formation.

The slag material may be a blast furnace slag but is preferably a steel making slag, more preferably a stainless steel making slag. Steel making slags may be converter slags (such as LD slags) or electric arc furnace slags (EAF slags). Common steel making slags do not contain, or only small amounts of heavy metals such as chromium and nickel and therefore do not present such big leaching problems as stainless steel slags. Stainless steel slags generally contain more than 3000 mg/kg chromium and usually even more than 5000 mg/kg chromium. They may also contain nickel, more particularly more than 300 mg/kg, in particular more than 400 mg/kg and often even more than 500 mg/kg nickel. By carbonating these carbonatable slags, leaching of these heavy metals can be reduced or even prevented. Moreover, the carbonation process reduces the amount of free lime, or free magnesia, which may causes swelling problems (by hydration to the corresponding hydroxide) when the slag material is applied in bounded applications such as in concrete and asphalt. These swelling problems are especially problematic for common steel slags since these slags contain generally more free lime and magnesia than stainless steel slags.

Steel slags, and in particular stainless steel slags, are usually crushed into a granular material so that the metals contained in the slag material can be recycled. The coarser fraction of the crushed stainless steel slag can be used as coarse or fine aggregate in concrete of asphalt. The finer fraction, in particular the 0-500 µm fraction, has however too high water absorption properties so that it is not suitable, as such, for these applications. The finer fraction contains indeed a larger amount of gamma dicalcium silicate (γ-C2S) which is produced during the solidification of the liquid slag when a portion of the beta dicalcium silicates (β-C2S) is further transformed in the gamma polymorph. Due to the resulting expansion, cracks are formed and a so-called falling slag is produced which has a high water absorption. Since this fine stainless steel slag fraction is produced in quite large amounts, and has nearly no useful applications, it is preferably used in the method of the present invention.

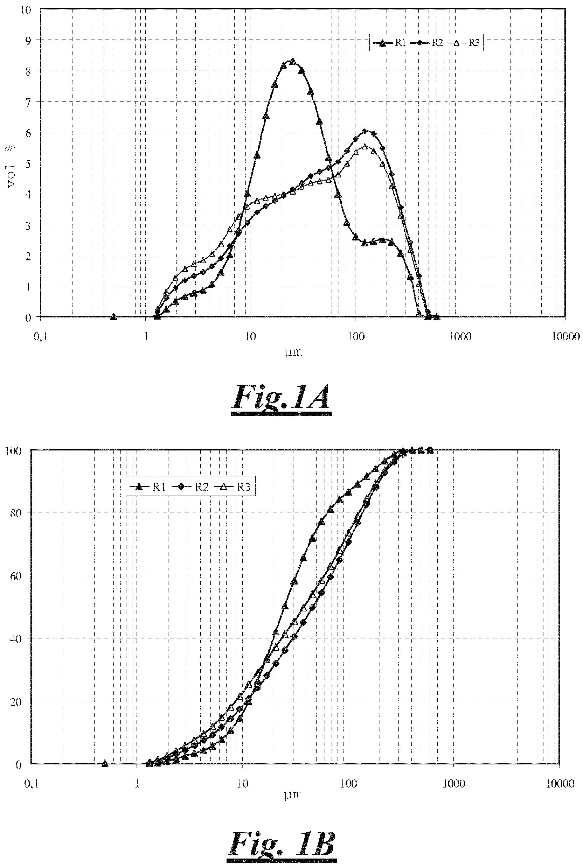

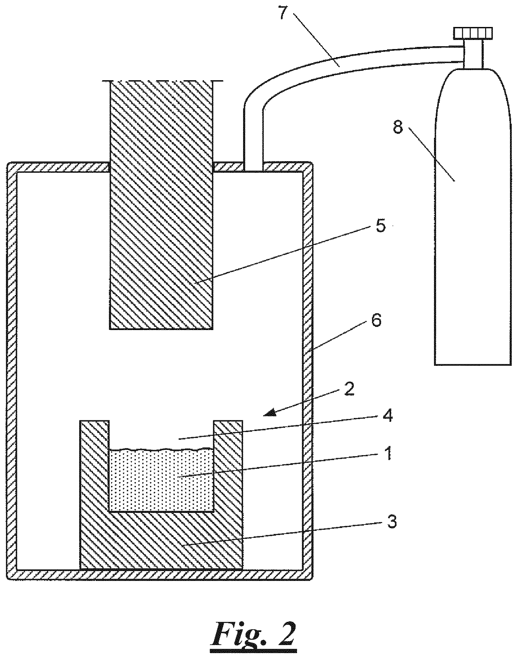

Figure 1A represents the particle size distribution of three samples of such fine stainless steel slag fractions R1, R2 and R3 (particle size occurrence in % by volume versus particle size in µm) and Figure 2A represents the corresponding cumulative values (% by volume versus the particle size in µm).

In the method of the present invention the granular, carbonatable material 1 is applied in a mould 2 and is press-moulded therein. Figure 2 shows schematically a mould 2 which can be used in the method of the present invention. This mould comprises a lower mould part 3 with a cylindrical mould cavity 4 and a piston 5. This piston 5 fits with some clearance into the cylindrical mould cavity 4 and can be inserted under pressure therein and removed therefrom by means of a hydraulic cylinder which has not been shown in the drawings. The mould is surrounded by an enclosure 6 provided with an opening for the piston 5. The enclosure is connected by means of a tubing 7 to a bottle 8 filled with carbon dioxide gas. Since the enclosure 6 is hermetically sealed, the gas contained therein can be replaced by carbon dioxide gas by simply allowing carbon dioxide gas to flow from the bottle 8 into the enclosure.

A first essential feature of the method according to the invention is that the granular material 1 is press-moulded in the mould 2 under a compaction pressure of at least 25 MPa. In a preferred embodiment, this compaction pressure is higher than 45 Mpa, preferably higher than 70 Mpa, more preferably higher than 90 MPa and most preferably higher than 110 MPa, with higher compaction pressures, in particular pressures higher than 120 MPa or higher than 130 MPa, being even more preferred. It has been found that with such high compaction pressures, compacts can be made which have already a relatively high compression strength. It has also been found that under such high compaction pressures, certain mineralogical changes occur in the granular material. In particular it has been observed that the content of crystalline portlandite phases is reduced, in particular the content of portlandite with the preferred orientation (00I), i.e. the large portlandite crystals. The reduction of the amount of these crystals may be due to pressure dissolution phenomena at the contacts between the particles (grains) of the granular material.

A further essential feature of the method according to the invention is that during the press-moulding step the compacted granular material is carbonated by means of a gas which contains at least 1 vol.% of carbon dioxide. Notwithstanding the fact that during the press-moulding step itself, penetration of carbon dioxide into the compact can be assumed to be very limited (especially when water is expelled out of the granular material as a result of the compression thereof) so that no large amounts of carbonates can be formed, it was found that this small amount of carbonates has a significant effect on the strength development. It has even been found surprisingly that at such high compaction pressures a higher increase of the compressive strength was obtained by the carbonation than at lower compaction pressures. Synergetic effects thus appear to arise between the high compaction pressures and the simultaneous carbonation of the granular material. The present inventors have found that this is not due to an increased carbonate formation at higher compaction pressures since at such higher compaction pressures, certainly not more but rather less carbonates were formed whilst the carbonation had a greater strength increasing effect than at lower compaction pressures.

The gas used to carbonate the granular material during the press-moulding step has preferably a carbon dioxide content of at least 3 vol.%, more preferably of at least 5 vol.% and most preferably of at least 7 vol.%. Higher carbon dioxide contents of at least 20, 50 or 75 vol.% are even more preferred.

Press-moulding the granular material so that the particles of the granular material adhere to one another requires only a short period of time. The compaction pressure of at least 25 MPa is maintained preferably for at least 10 seconds, more preferably for at least 20 seconds and most preferably for at least 30 seconds. Since the most efficient increase in compression strength is achieved during the first press-moulding phase, the compaction pressure is preferably maintained for less than 10 minutes, more preferably for less than 5 minutes and most preferably for less than 2 minutes.

The gas containing the carbon dioxide may contain sufficient water for the carbonation reaction. However, the water for the carbonation reaction is preferably already contained in the granular material. Before it is press-moulded, this granular material therefore has preferably a water content of at least 1 wt.%, more preferably of at least 2 wt.% and most preferably of at least 3 wt.%.

The granular material is preferably compacted and carbonated during the press-moulding step to such an extent that the bonded article obtained by this press-moulding step, i.e. just after having released the compaction pressure, has a compressive strength, measured in accordance with the Belgian standard NBN B 15-220, of at least 3 MPa, preferably of at least 5 MPa and more preferably of at least 10 MPa. For increasing the compressive strength, the compaction pressure and/or the press-moulding time can be increased. Moreover, the carbon dioxide content of the gas used to carbonate the granular material can also be increased. Also the contact time between the carbonation gas and the granular material before this granular material is subjected to the compaction pressure can be increased to increase the compressive strength. Finally, the particle size distribution of the granular material has an effect on the strength of the articles.

The compressive strength which is achieved immediately after the press-moulding step is not only important to be able to handle the green articles (for which the articles should preferably have a green strength of at least 3 MPa). As demonstrated hereinafter, the increase in compressive strength by the presence of the carbon dioxide gas during the press-moulding step is maintained during a subsequent carbonation step so that articles having a higher final strength can be achieved or so that articles with a predetermined strength can be obtained within a shorter period of time (requiring a shorter subsequent carbonation step).

The granular material is preferably already brought in contact with the carbon dioxide containing gas before being press-moulded, and this preferably for more than 10 seconds, more preferably for more than 20 seconds, and most preferably for more than 30 seconds, before the granular material is subjected to said compaction pressure. The carbon dioxide containing gas is more particularly allowed to penetrate into the granular material before the press-moulding step, most preferably before any compaction of the granular material. The gas can for example be allowed to penetrate into the granular material when it has been applied into the mould, but is can also already be allowed to penetrate into the granular material when this material is being introduced into the mould so that is can even penetrate better into this granular material.

To enhance the penetration, or diffusion, of the carbon dioxide containing gas into the granular material, after being applied in said mould but before being press-moulded therein, the granular material has a water content of W vol.% which is smaller than its porosity of P vol.%. In other words, at that time the granular material is not saturated with water and contains open pores wherein the carbon dioxide containing gas can easily penetrate. Preferably, the water content W of the granular material is smaller than 0.9 times its porosity P, more preferably smaller than 0.8 times its porosity and most preferably smaller than 0.7 times its porosity.

During the press-moulding step itself, the granular material may be saturated, or super-saturated, with water as a result of its compression. Any excess water is preferably expelled from the granular material during the press-moulding step. More generally, during the press-moulding step, gas and/or liquid is allowed to escape out of the granular material so that when there is an excess of water, this excess of water does not, or nearly not, reduce the forces which are exerted onto the particles of the granular material under the compaction pressure. The mould is thus in particular preferably provided with one or more outlet openings for said gas and/or liquid. These openings may be formed by a clearance between the piston and the mould cavity, by holes in the mould or by a porous material used for the construction of the mould.

After the press-moulding step, i.e. after having removed the compaction pressure, the press-moulded article is preferably further carbonated by bringing it into contact with a further gas which contains at least 1 vol.% of carbon dioxide. In this way a higher compressive strength can be achieved. It was found that the gain in compressive strength by carbonating the granular material already during the press-moulding step, could be maintained during the subsequent carbonation step, and could thus result in a higher final compressive strength.

The carbon dioxide containing gas by means of which the press-moulded article is preferably further carbonated contains preferably at least 3 vol.%, preferably at least 5 vol.% and more preferably at least 7 vol.% of carbon dioxide. Higher carbon dioxide contents of at least 20, 50 or 75 vol.% are even more preferred. The press-moulded article is preferably further carbonated with this gas for a period of at least 5 minutes, preferably for a period of at least 15 minutes and more preferably for a period of at least 25 minutes.

### Experimental results

### Experiment 1

This experiment was carried out with a fine fraction (0-500 µm) of stainless steel slags which have already been weathered for a few months. Due to this weathering, oxides have been converted into hydroxides and partially also into carbonates so that clumps are formed. This granular material was passed through a 2 mm sieve to break these lumps and to homogenize the mixture. The granular material had a moisture content of 17 vol.%. About 12 grams of this material was introduced in a mould as illustrated in Figure 2 and having a mould cavity with a diameter of about 25 mm. By means of the piston, compaction pressures of 73, 136 and 318 MPa respectively were exerted onto the granular material. This compaction pressure was maintained for 10 seconds. For each compaction pressure, two compacts were made: one under atmospheric conditions, one under a CO₂ enriched atmosphere. For working under a CO₂ enriched atmosphere, the granular material is first applied in the mould cavity 4 without being compacted. A continuous flow of CO₂ gas is than supplied from the gas bottle 8 (containing 100% of CO₂ gas) into the enclosure 6 so that the air contained therein was replaced by CO₂ gas. After 150 seconds the granular material was then press-moulded for 10 seconds.

**Table 1: Press-moulding conditions and results.**

| Compaction Pressure (MPa) | Wet wt. (g) | Dry wt. (g) | Height (mm) | Diam. (mm) | Dry dens. ρ (g/cm³)^{(*)} | Dry Matter (%) |
|---|---|---|---|---|---|---|
| **Experiments with CO₂ during press-moulding** | | | | | | |
| 73 (Exp. 1) | 12.50 | 10.36 | 12.36 | 25.18 | 1.68 | 82.89 |
| 136 (Exp. 2) | 11.98 | 10.19 | 11.23 | 25.11 | 1.83 | 85.04 |
| 313 (Exp. 3) | 11.8 | 10.35 | 10.4 | 25.14 | 2.01 | 87.72 |

| **Experiments without CO₂ during press-moulding** | | | | | | |
|---|---|---|---|---|---|---|
| 73 (Exp. 4) | 11.86 | 9.88 | 11.74 | 25.12 | 1.70 | 83.27 |
| 136 (Exp. 5) | 11.48 | 9.80 | 10.62 | 25.13 | 1.86 | 85.40 |
| 313 (Exp. 6) | 11.26 | 9.86 | 9.99 | 25.16 | 1.99 | 87.54 |

| | | | | | | |
|---|---|---|---|---|---|---|
| ^{(*)} : calculated value. | | | | | | |

The dry matter contents increase with increasing compaction pressure. This is due to the fact that the granular material is compressed to such an extent that the water content becomes larger than the porosity so that water is expelled out of the granular material.

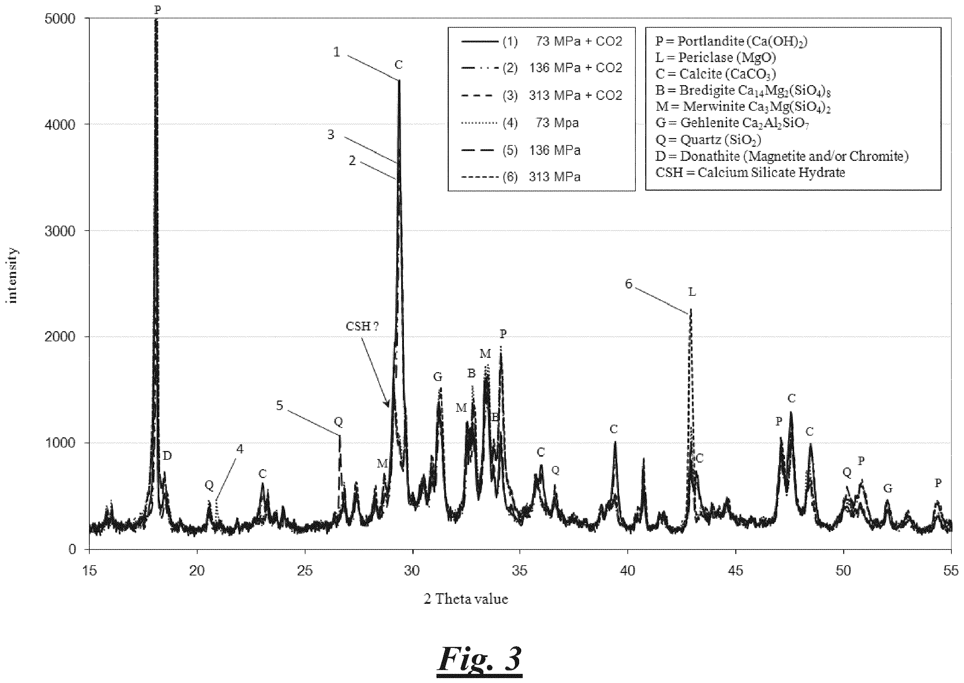

The mineralogical changes were examined by means of XRD analyses and the results thereof are shown in Figures 3 to 6.

First of all it is clear that the calcite (CaCO₃) intensity (or content) increases and the portlandite (Ca(OH)₂) intensity decreases when press-moulding the granular material under a CO₂ enriched atmosphere.

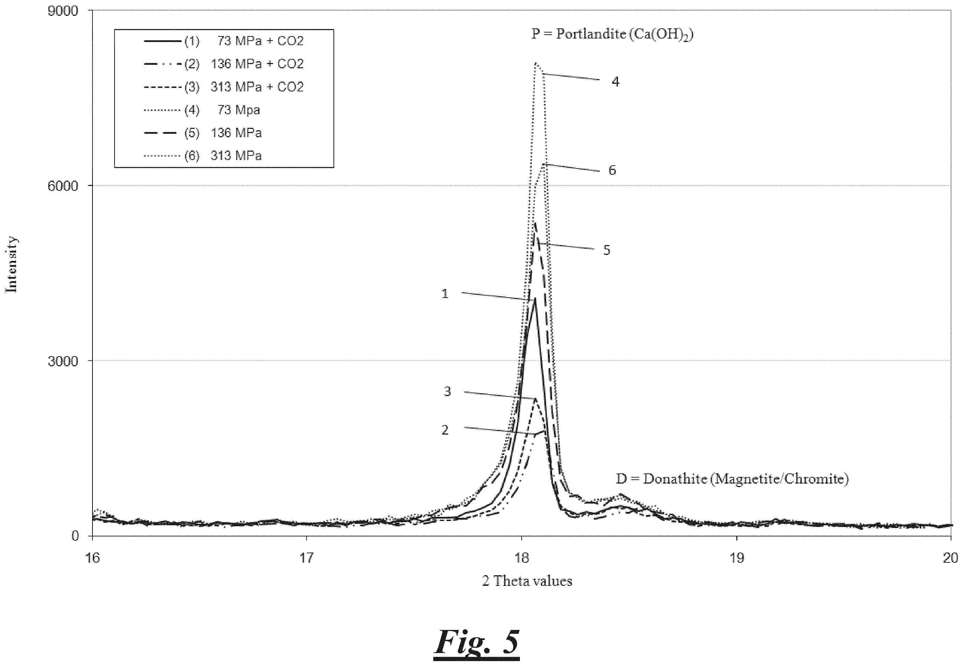

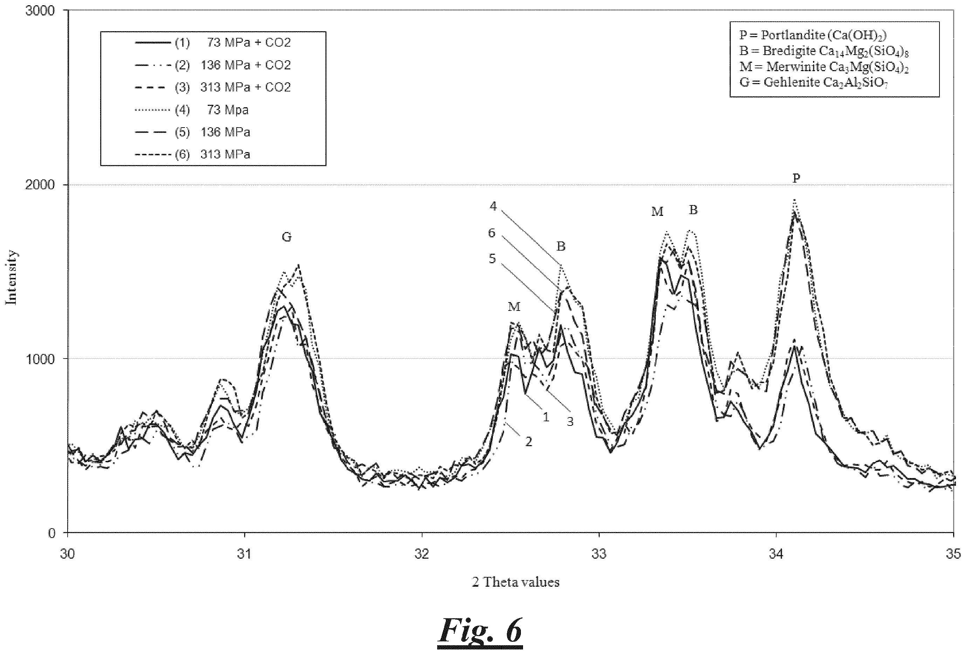

The intensity of the portlandite with a preferred orientation (00I) (see Figure 5) also appears to differ dependent on the compaction pressure (without CO₂), this in contrast to the other portlandite reflections (hkl) (see Figure 6). The highest portlandite intensity of the (00I) reflections is measured at a minimum compaction pressure of 73 MPa whereas a lower portlandite is measured at the higher compaction pressures applied in accordance with the invention. This reduction is not observed for the other portlandite reflections. These observations appears to demonstrate a reduction of the content of the larger portlandite crystals at increased pressures. As a matter of fact, large portlandite crystals will sooner assume a preferred orientation than smaller crystals. The decrease of the content of larger portlandite crystals is not accompanied by an increase of the content of the smaller crystals. The decrease of the content of larger portlandite crystals can possibly be explained by a consumption of these larger crystals by pressure dissolution at the contact points between different particles (grains), with formation of CSH (calcium silicate hydrates) or other compounds which are difficult to detect with XRD.

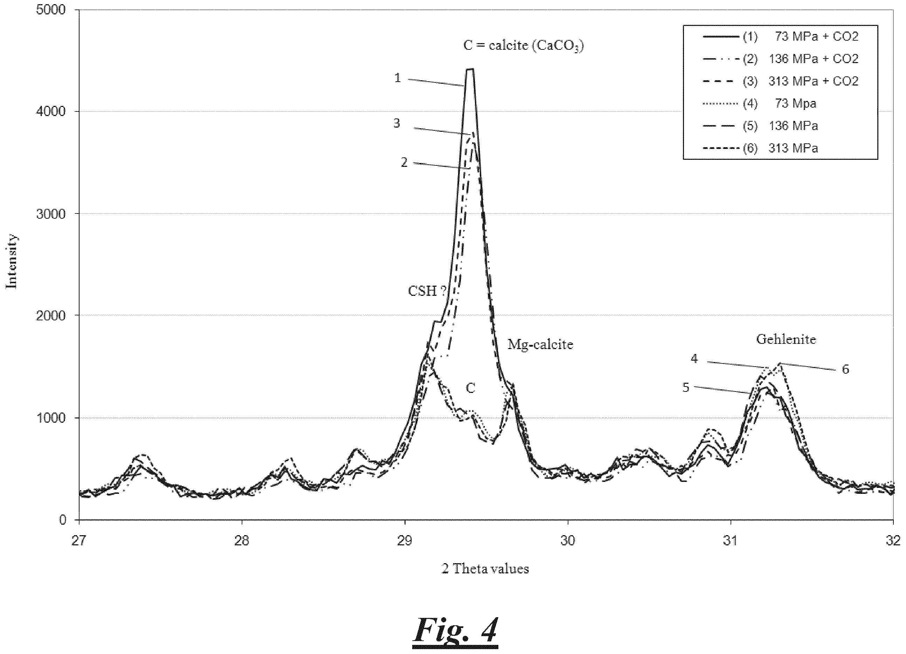

From Figure 4 it appears that the amount of calcite which is produced by the carbonation step appears to be somewhat smaller at the higher compaction pressures. Notwithstanding this smaller amount of calcite formation, it has been demonstrated in the following experiments that a same or even a larger increase of the compressive strength can be achieved with the carbonation step at the higher compaction pressures applied in the method of the present invention.

### Experiment 2

In this experiment the same procedure was followed as in Experiment 1. The produced compacts had similar dimensions as in Experiment 1 so that these have not been indicated in Table 2, only the dry densities calculated based on these dimensions have been indicated. The compressive strength of the obtained compacts have however been measured in accordance with the Belgian standard NBN B 15-220. After the press-moulding/carbonation step, the compacts were dried. In the following table, the indicated dry matter contents are thus obtained after a further drying step.

**Table 2: Compressive strengths and the increase of compressive strengths obtained by carbonating during the press-moulding step under different compaction pressures.**

| Comp. pressure (MPa) | Wet wt. (g) | Dry wt. (g) | Dry dens. ρ (g/cm³)^{(*)} | Dry matter (%) | Compr. strength (MPa) | Average compr. strength (MPa) | Increase of av. compr. strength by carbonation |
|---|---|---|---|---|---|---|---|
| **Experiments with CO₂ during press-moulding** | | | | | | | |
| 73 | 11.2 | 10.2 | 1.67 | 91 | 11 | 12.7 | +1.9 MPa |
| | 11.7 | 10.4 | 1.67 | 89 | 15 | | |
| | 12.4 | 10.7 | 1.66 | 86 | 12 | | |
| 136 | 12.2 | 10.9 | 1.96 | 89 | 37 | 40.0 | +9.0 MPa |
| | 12.2 | 11.0 | 1.99 | 90 | 45 | | |
| | 12.0 | 10.7 | 1.96 | 89 | 38 | | |
| 313 | 11.6 | 10.7 | 2.07 | 92 | 49 | 44.5 | +9.5 MPa |
| | 11.7 | 10.7 | 2.08 | 92 | 40 | | |

| | | | | | | | |
|---|---|---|---|---|---|---|---|
| ^{(*)} : calculated value | | | | | | | |

XRD analyses showed again that the calcite content increased and the portlandite content decreased when press-moulding under a CO₂ enriched atmosphere. The intensity of the calcite formed by the carbonation was substantially independent of the compaction pressure and was even somewhat smaller for the highest compaction pressure. It was also observed again that the portlandite intensity considerably decreased for the higher compaction pressures of 136 and 313 MPa, compared to the lower compaction pressure of 73 MPa, when press-moulding without CO₂.

From Table 2, it can be deduced that the compressive strengths increase with increasing compaction pressure, and that for compaction pressures as used in the method of the present invention quite high compressive strength can already been achieved without simultaneous carbonation. When press-moulding under a CO₂ enriched atmosphere, a further increase of the compressive strength was obtained. The increase in compressive strength obtained by performing the press-moulding step under a CO₂ enriched atmosphere was considerably higher when press-moulding under the higher compaction pressures as used in the method of the present invention. This is quite surprising since under these higher compaction pressures a same or even a somewhat smaller amount of calcite was found to be produced. Apparently, the produced calcite was a more effective cement under these higher pressures.

### Experiment 3

In this experiment the same procedure was followed as in Experiment 2. The only difference was that the compaction force was maintained for 45 seconds and additional compaction forces were applied. The same granular material was used. However, the tests were performed about 21 months later so that the granular material has been subjected for an additional 21 months to natural carbonation (by the atmospheric carbon dioxide). The tests were also done in triplicate, only the average values having been indicated in the following Table 3.

**Table 3: Compressive strengths and the increase of compressive strengths obtained by carbonating during the press-moulding step under different compaction pressures.**

| Comp. pressure (MPa) | Carbon dioxide | Dry dens. ρ (g/cm³)^{(*)} | Dry matter (%) | Average compr. Strength (MPa) | Increase of av. compr. strength by carbonation |
|---|---|---|---|---|---|
| 7.5 | + | 1.42 | 84.09 | 1.8 | +0.7 |
| | - | 1.43 | 83.38 | 1.1 | |
| 25 | + | 1.58 | 84.08 | 3.7 | +1.7 |
| | - | 1.58 | 83.09 | 2.0 | |
| 44 | + | 1.66 | 84.09 | 5.4 | +1.6 |
| | - | 1.68 | 83.50 | 3.8 | |
| 70 | + | 1.69 | 83.48 | 9.8 | +4.2 |
| | - | 1.74 | 83.91 | 5.6 | |
| 90 | + | 1.79 | 84.76 | 10.1 | +3.5 |
| | - | 1.80 | 84.84 | 6.6 | |
| 110 | + | 1.85 | 85.57 | 10.7 | +3.1 |
| | - | 1.85 | 85.36 | 7.6 | |
| 130 | + | 2.11 | 97.32 | 10.8 | +3.1 |
| | - | 1.87 | 86.02 | 7.7 | |
| 170 | + | 1.95 | 87.11 | 13.5 | +4.0 |
| | - | 1.96 | 87.25 | 9.5 | |
| 210 | + | | | 15.0 | +3.4 |
| | - | | | 11.6 | |
| 250 | + | 2.04 | 88.63 | 13.1 | +2.9 |
| | - | 2.03 | 88.59 | 13.2 | |
| 300 | + | 2.06 | 89.43 | 15.8 | +1.9 |
| | - | 2.06 | 89.25 | 13.9 | |

| | | | | | |
|---|---|---|---|---|---|
| ^{(*)} : calculated value | | | | | |

For both the CO₂ enriched and atmospheric conditions during press-moulding, the compression strength obtained in this experiment was lower than previously achieved. This could be due to aging of the small grained material over time so that part of the material was carbonated naturally resulting in the presence of less reactive minerals for carbonation.

The obtained results show that as from a compaction pressure of 70 Mpa, the presence of carbon dioxide during the press-moulding step has a greater effect on the compression strength. The average increase of the compression strength for the lower compaction pressures was about 1.3 MPa whereas for the higher compaction pressures the average increase of the compression strength was 3.3 MPa.

### Experiment 4

In this experiment the same procedure was followed as in Experiment 2 (with the same granular material which was of the same age) but the produced compacts were subjected to an additional carbonation step. During this further carbonation step, the compacts were more particularly carbonated for 0.5; 1; 3 and respectively 16 hours at a CO₂ pressure of 5 MPa and a temperature of 20°C. Since after the press-moulding step the compacts were saturated with water, and since a water saturated compact is difficult to carbonate, the compacts were again subjected to a drying step before carrying out the additional carbonation step. The tests were each time done with two samples, the results of these experiments are indicated in Table 4 and are the average values obtained for the two samples.

**Table 4: Compressive strengths (MPa) after press-moulding with and without CO₂ at different compaction pressures and after an additional carbonation step at 50 bars CO₂ pressure and 20°C.**

| Comp. pressure | 73 MPa | | | 136 MPa | | | 313 MPa | | |
|---|---|---|---|---|---|---|---|---|---|
| Press-moulding | - CO₂ | + CO₂ | | - CO₂ | + CO₂ | | - CO₂ | + CO₂ | |
| Add. carbonation | Compr. str. | Compr. str. | Delta | Compr. str. | Compr. str. | Delta | Compr. str. | Compr. str. | Delta |
| none | 10.8 | 12.7 | +1.9 | 31.0 | 40.0 | +9.0 | 35.0 | 44.5 | +9.5 |
| 0.5 h | 27.5 | 28.5 | +1.0 | 37.5 | 51.0 | +3.5 | 39.5 | 49.0 | +9.5 |
| 1.0 h | 25.0 | 21.5 | -1.0 | 43.0 | 48.0 | +5.0 | 45.0 | 53.0 | +8.0 |
| 3.0 h | - | - | - | 39.5 | 50.0 | +10.5 | 43.5 | 53.0 | +9.5 |
| 16 h | 29.0 | 28 | -1.0 | 31.0 | 42.3 | +11.3 | 42.0 | 45.5 | +3.5 |

From the results obtained in this experiment it can be seen that also for the compacts which were press-moulded in accordance with the present invention, i.e. at higher compaction pressures and with simultaneous carbonation, an additional increase of the compressive strength can be achieved with a subsequent carbonation step. The initial gain of strength by the carbonation during the press-moulding step was moreover generally maintained even after the additional carbonation step.

According to the invention, it has thus been found to be advantageous to carbonate the granular material both during the press-moulding step and during a subsequent additional carbonation step, with the carbonated compact obtained after the press-moulding step being preferably dried to lower its water content before subjecting it to the additional carbonation step. This additional carbonation step can be performed with a same gas, i.e. with a gas containing at least 1 vol.%, preferably at least 3 vol.%, more preferably at least 5 vol.% and most preferably at least 7 vol.% of carbon dioxide.

### Experiment 5

In this experiment the same procedure was followed as in Experiment 2 (with the same granular material which was of the same age) but the compacts were only produced with the highest compaction pressure of 313 MPa. This experiment was set up to determine the effect of the contact time of the carbon dioxide containing gas with the granular material and of the duration of the press-moulding step on the compressive strength of the produced carbonated compact. The contact time comprised 150 and 300 second and the duration of the press-moulding step (i.e. the period of time during which the granular material was subjected to the compaction pressure) comprised 45 and 120 seconds.

**Table 5: Compressive strengths (MPa) obtained by varying the CO₂ gas contact time and the duration of press-moulding.**

| CO₂ contact time | 150 sec | | 300 sec |
|---|---|---|---|
| Duration of press-moulding | 45 sec | 120 sec | 45 sec |
| Compressive Strength (MPa) | 41.8 | 50.6 | 53.4 |
| | 35.7 | 49.0 | 53.6 |
| Average (MPa) | 38.8 | 49.8 | 53.5 |

This experiment demonstrates that by increasing the contact time of the carbon dioxide containing gas with the granular material prior to the press-moulding step and/or by increasing the duration of the press-moulding step the compressive strength of the obtained carbonated compact can be increased.

## Claims

1. A method for producing a bonded article by press-moulding and carbonating a granular, carbonatable material, **characterised in that** the granular material is applied in a mould, is brought in contact in said mould with a gas which contains at least 1 vol.% of carbon dioxide and is subsequently press-moulded in said mould under a compaction pressure of at least 25 Mpa in the presence of said gas so as to be carbonated during said press-moulding step, where said granular material comprises slag from metal production processes, slag from the production of phosphorus, bottom ash and/or fly ash, the granular material preferably comprises steel slag, in particular stainless steel slag.

2. A method according to claim 1, **characterised in that** after being applied in said mould but before being press-moulded therein, the granular material has a porosity of P vol.% and a water content of W vol.%, W being smaller than P, preferably smaller than 0.9 x P, more preferably smaller than 0.8 x P and most preferably smaller than 0.7 x P.

3. A method according to claim 1 or 2, **characterised in that** said gas is allowed to penetrate into said granular material before said press-moulding step, in particular for a period of time of at least 10, preferably at least 20 and more preferably at least 30 seconds before the granular material is subjected to said compaction pressure.

4. A method according to any one of the claims 1 to 3, **characterised in that** during said press-moulding step gas and/or liquid is allowed to escape out of said granular material, the mould being in particular provided with one or more outlet openings for said gas and/or liquid.

5. A method according to any one of the claims 1 to 4, **characterised in that** during said press-moulding step water is expelled from said granular material.

6. A method according to any one of the claims 1 to 5, **characterised in that** said compaction pressure is maintained for at least 10 seconds, preferably for at least 20 seconds and more preferably for at least 30 seconds, the compaction pressure being preferably maintained for less than 10 minutes, preferably for less than 5 minutes and more preferably for less than 2 minutes.

7. A method according to any one of the claims 1 to 6, **characterised in that** said compaction pressure is higher than 45 MPa, preferably higher than 70 MPa, more preferably higher than 90 Mpa, most preferably higher than 110 MPa and even more preferably higher than 120 MPa.

8. A method according to any one of the claims 1 to 7, **characterised in that** said gas contains at least 3 vol.%, preferably at least 5 vol.% and more preferably at least 7 vol.% of carbon dioxide.

9. A method according to any one of the claims 1 to 8, **characterised in that** before being press-moulded the granular material applied in said mould has a water content of at least 1 wt.%, preferably at least 2 wt.% and more preferably at least 3 wt.%.

10. A method according to any one of the claims 1 to 9, **characterised in that** said granular, carbonatable material has a pH higher than 8.3 and contains at least one alkaline earth metal silicate phase, the material containing preferably crystalline phases, in particular dicalcium silicate.

11. A method according to any one of the claims 1 to 10, **characterised in that** the granular material which is applied in said mould comprises calcium oxide and/or calcium hydroxide, the total amount of calcium oxide and calcium hydroxide being preferably at least 1% by dry weight, preferably at least 2% by dry weight.

12. A method according to any one of the claims 1 to 11, **characterised in that** said granular material has no or substantially no hydraulic binding properties.

13. A method according to any one of the claims 1 to 12, **characterised in that** the granular material is compacted and carbonated during said press-moulding step to such an extent that the bonded article obtained by this press-moulding step has a compressive strength, measured in accordance with the Belgian standard NBN B 15-220, of at least 3 MPa, preferably of at least 5 MPa, more preferably of at least 10 MPa and most preferably of at least 15 MPa.

14. A method according to any one of the claims 1 to 13, **characterised in that** at least 50 vol.% of said granular material has a particle size smaller than 2 mm, preferably smaller than 1 mm and more preferably smaller than 0.5 mm and at least 50 vol.% of said granular material has a particle size larger than 15 µm, preferably larger than 20 µm and more preferably larger than 25 µm.

15. A method according to any one of the claims 1 to 14, **characterised in that** the press-moulded article is further carbonated by bringing it into contact with a further gas which contains at least 1 vol.% of carbon dioxide.

16. A method according to claim 15, **characterised in that** said further gas contains at least 3 vol.%, preferably at least 5 vol.% and more preferably at least 7 vol.% of carbon dioxide.

17. A method according to claim 15 or 16, **characterised in that** the press-moulded article is further carbonated with said further gas for a period of at least 5 minutes, preferably for a period of at least 15 minutes and more preferably for a period of at least 25 minutes.

## Patentansprüche

1. Ein Verfahren zur Herstellung eines gebundenen Artikels durch Pressformen und Karbonatisieren eines körnigen, karbonatisierbaren Materials, **dadurch gekennzeichnet, dass** das körnige Material in einem Formstück angebracht wird, im erwähnten Formstück mit einem Gas in Kontakt gebracht wird, welches mindestens 1 Vol.-% Kohlendioxid enthält, und danach im erwähnten Formstück unter einem Verdichtungsdruck von mindestens 25 Mpa in Anwesenheit des erwähnten Gases pressgeformt wird, um während des erwähnten Schrittes des Pressformens karbonatisiert zu werden, wobei das erwähnte körnige Material Schlacke von Metallproduktionsverfahren, Schlacke von der Phosphorproduktion, Rostasche und/oder Flugasche umfasst, das körnige Material bevorzugt Stahlschlacke umfasst, insbesondere Edelstahlschlacke.

2. Ein Verfahren nach Anspruch 1, **dadurch gekennzeichnet, dass** das körnige Material, nachdem es im erwähnten Formstück angebracht wurde, aber bevor es darin pressgeformt wird, eine Porosität von P Vol.-% und einen Wassergehalt von W Vol.-% hat, wobei W kleiner ist als P, bevorzugt kleiner als 0,9 x P, noch besser kleiner als 0,8 x P und am besten kleiner als 0,7 x P.

3. Ein Verfahren nach Anspruch 1 oder 2, **dadurch gekennzeichnet, dass** das erwähnte Gas vor dem erwähnten Schritt des Pressformens in das erwähnte körnige Material eindringen kann, insbesondere für einen Zeitraum von mindestens 10, bevorzugt mindestens 20 und noch besser mindestens 30 Sekunden, bevor das körnige Material dem erwähnten Verdichtungsdruck ausgesetzt wird.

4. Ein Verfahren nach irgendeinem der Ansprüche 1 bis 3, **dadurch gekennzeichnet, dass** während des erwähnten Schrittes des Pressformens Gas und/oder Flüssigkeit aus dem erwähnten körnigen Material entweichen kann, da das Formstück insbesondere mit einer oder mehreren Auslassöffnungen für das erwähnte Gas und/oder die erwähnte Flüssigkeit ausgerüstet ist.

5. Ein Verfahren nach irgendeinem der Ansprüche 1 bis 4, **dadurch gekennzeichnet, dass** während des erwähnten Schrittes des Pressformens Wasser aus dem erwähnten körnigen Material ausgetrieben wird.

6. Ein Verfahren nach irgendeinem der Ansprüche 1 bis 5, **dadurch gekennzeichnet, dass** der erwähnte Verdichtungsdruck mindestens 10 Sekunden lang, bevorzugt mindestens 20 Sekunden lang und noch besser mindestens 30 Sekunden lang gehalten wird, wobei der Verdichtungsdruck bevorzugt weniger als 10 Minuten lang, bevorzugt weniger als 5 Minuten lang und noch besser weniger als 2 Minuten lang gehalten wird.

7. Ein Verfahren nach irgendeinem der Ansprüche 1 bis 6, **dadurch gekennzeichnet, dass** der erwähnte Verdichtungsdruck höher ist als 45 MPa, bevorzugt höher als 70 MPa, noch besser höher als 90 Mpa, am besten höher als 110 MPa und sogar noch besser höher als 120 MPa.

8. Ein Verfahren nach irgendeinem der Ansprüche 1 bis 7, **dadurch gekennzeichnet, dass** das erwähnte Gas mindestens 3 Vol.-%, bevorzugt mindestens 5 Vol.-% und noch besser mindestens 7 Vol.-% Kohlendioxid enthält.

9. Ein Verfahren nach irgendeinem der Ansprüche 1 bis 8, **dadurch gekennzeichnet, dass** das körnige Material, welches im erwähnten Formstück angebracht wird, bevor es pressgeformt wird, einen Wassergehalt von mindestens 1 Gew.-% hat, bevorzugt mindestens 2 Gew.-% und noch besser mindestens 3 Gew.-%.

10. Ein Verfahren nach irgendeinem der Ansprüche 1 bis 9, **dadurch gekennzeichnet, dass** das erwähnte körnige, karbonatisierbare Material einen pH-Wert von mehr als 8,3 hat und zumindest eine Phase eines Erdalkalimetallsilikats enthält, wobei das Material bevorzugt kristalline Phasen enthält, insbesondere Dicalciumsilikat.

11. Ein Verfahren nach irgendeinem der Ansprüche 1 bis 10, **dadurch gekennzeichnet, dass** das körnige Material, welches im erwähnten Formstück angebracht wird, Calciumoxid und/oder Calciumhydroxid umfasst, wobei die Gesamtmenge von Calciumoxid und Calciumhydroxid bevorzugt mindestens 1 % Trockenmasse beträgt, bevorzugt mindestens 2 % Trockenmasse.

12. Ein Verfahren nach irgendeinem der Ansprüche 1 bis 11, **dadurch gekennzeichnet, dass** das erwähnte körnige Material keine oder im Wesentlichen keine hydraulisch bindenden Eigenschaften hat.

13. Ein Verfahren nach irgendeinem der Ansprüche 1 bis 12, **dadurch gekennzeichnet, dass** das körnige Material während des erwähnten Schrittes des Pressformens in einem solchen Ausmaß verdichtet und karbonatisiert wird, dass der gebundene Artikel, der durch diesen Schritt des Pressformens erhalten wurde, eine Druckfestigkeit, gemessen gemäß der belgischen Norm NBN B 15-220, von mindestens 3 MPa hat, bevorzugt mindestens 5 MPa, noch besser mindestens 10 MPa und am besten mindestens 15 MPa.

14. Ein Verfahren nach irgendeinem der Ansprüche 1 bis 13, **dadurch gekennzeichnet, dass** mindestens 50 Vol.-% des erwähnten körnigen Materials eine Korngröße von weniger als 2 mm haben, bevorzugt weniger als 1 mm und noch besser weniger als 0,5 mm, und dass mindestens 50 Vol.-% des erwähnten körnigen Materials eine Korngröße von mehr als 15 µm, bevorzugt mehr als 20 µm und noch besser mehr als 25 µm haben.

15. Ein Verfahren nach irgendeinem der Ansprüche 1 bis 14, **dadurch gekennzeichnet, dass** der pressgeformte Artikel weiter karbonatisiert wird, indem er mit einem weiteren Gas in Kontakt gebracht wird, welches mindestens 1 Vol.-% Kohlendioxid enthält.

16. Ein Verfahren nach Anspruch 15, **dadurch gekennzeichnet, dass** das erwähnte weitere Gas mindestens 3 Vol.-%, bevorzugt mindestens 5 Vol.-% und noch besser mindestens 7 Vol.-% Kohlendioxid enthält.

17. Ein Verfahren nach Anspruch 15 oder 16, **dadurch gekennzeichnet, dass** der pressgeformte Artikel weiter mit dem erwähnten weiteren Gas für einen Zeitraum von mindestens 5 Minuten karbonatisiert wird, bevorzugt für einen Zeitraum von mindestens 15 Minuten und noch besser für einen Zeitraum von mindestens 25 Minuten.

## Revendications

1. Procédé de production d'un article lié par moulage par pressage et carbonatation d'un matériau granulaire carbonatable,
**caractérisé en ce que** le matériau granulaire est appliqué dans un moule, est mis en contact dans ledit moule avec un gaz qui contient au moins 1 % en volume de dioxyde de carbone et est ensuite moulé par pressage dans ledit moule sous une pression de compactage d'au moins 25 Mpa en présence dudit gaz afin d'être carbonaté pendant ladite étape de moulage par pressage, où ledit matériau granulaire comprend du scorie provenant de procédés de production métallique, du scorie provenant de la production de phosphore, des cendres résiduelles et/ou des cendres volantes, le matériau granulaire comprend de préférence du scorie d'acier, notamment du scorie d'acier inoxydable.

2. Procédé selon la revendication 1, **caractérisé en ce qu'**après avoir été appliqué dans ledit moule mais avant d'y être moulé par pressage, le matériau granulaire a une porosité de P % en volume et une teneur en eau de W % en volume, W étant inférieur à P, de préférence inférieur à 0,9 x P, plus préférentiellement inférieur à 0,8 x P et encore plus préférentiellement inférieur à 0,7 x P.

3. Procédé selon la revendication 1 ou 2, **caractérisé en ce que** l'on laisse pénétrer ledit gaz dans ledit matériau granulaire avant ladite étape de moulage par pressage, en particulier pendant une période de temps d'au moins 10, de préférence d'au moins 20 et plus préférablement d'au moins 30 secondes avant que le matériau granulaire soit soumis à ladite pression de compactage.

4. Procédé selon l'une quelconque des revendications 1 à 3, **caractérisé en ce qu'**au cours de ladite étape de moulage par pressage, on laisse échapper un gaz et/ou un liquide hors dudit matériau granulaire, le moule étant en particulier pourvu d'une ou plusieurs ouvertures de sortie pour ledit gaz et/ou liquide.

5. Procédé selon l'une quelconque des revendications 1 à 4, **caractérisé en ce que** pendant ladite étape de moulage par pressage, de l'eau est expulsée dudit matériau granulaire.

6. Procédé selon l'une quelconque des revendications 1 à 5, **caractérisé en ce que** ladite pression de compactage est maintenue pendant au moins 10 secondes, de préférence pendant au moins 20 secondes et plus préférablement pendant au moins 30 secondes, la pression de compactage étant de préférence maintenue pendant moins de 10 minutes, de préférence pendant moins de 5 minutes et plus préférablement pendant moins de 2 minutes.

7. Procédé selon l'une quelconque des revendications 1 à 6, **caractérisé en ce que** ladite pression de compactage est supérieure à 45 MPa, de préférence supérieure à 70 MPa, plus préférablement supérieure à 90 Mpa, le plus préférablement supérieure à 110 MPa et encore plus préférablement supérieure à 120 MPa.

8. Procédé selon l'une quelconque des revendications 1 à 7, **caractérisé en ce que** ledit gaz contient au moins 3 % en volume, de préférence au moins 5 % en volume et plus préférablement au moins 7 % en volume de dioxyde de carbone.

9. Procédé selon l'une quelconque des revendications 1 à 8, **caractérisé en ce qu'**avant d'être moulé par pressage, le matériau granulaire appliqué dans ledit moule a une teneur en eau d'au moins 1 % en poids, de préférence d'au moins 2 % en poids et plus préférentiellement d'au moins 3 % en poids.

10. Procédé selon l'une quelconque des revendications 1 à 9, **caractérisé en ce que** ledit matériau granulaire carbonatable présente un pH supérieur à 8,3 et contient au moins une phase de silicate de métal alcalino-terreux, le matériau contenant de préférence des phases cristallines, en particulier du silicate dicalcique.

11. Procédé selon l'une quelconque des revendications 1 à 10, **caractérisé en ce que** le matériau granulaire qui est appliqué dans ledit moule comprend de l'oxyde de calcium et/ou de l'hydroxyde de calcium, la quantité totale d'oxyde de calcium et d'hydroxyde de calcium étant de préférence au moins 1% en poids sec, de préférence au moins 2 % en poids sec.

12. Procédé selon l'une quelconque des revendications 1 à 11, **caractérisé en ce que** ledit matériau granulaire n'a pas ou pratiquement pas de propriétés de liaison hydraulique.

13. Procédé selon l'une quelconque des revendications 1 à 12, **caractérisé en ce que** le matériau granulaire est compacté et carbonaté pendant ladite étape de moulage par pressage de telle sorte que l'article lié obtenu par cette étape de moulage par pressage a une résistance à la compression, mesurée conformément à la norme belge NBN B 15-220, d'au moins 3 MPa, de préférence d'au moins 5 MPa, plus préférentiellement d'au moins 10 MPa et de façon préférentielle d'au moins 15 MPa.

14. Procédé selon l'une quelconque des revendications 1 à 13, **caractérisé en ce qu'**au moins 50 % en volume dudit matériau granulaire présente une granulométrie inférieure à 2 mm, de préférence inférieure à 1 mm et plus préférablement inférieure à 0,5 mm et au moins 50 % en volume dudit matériau granulaire a une granulométrie supérieure à 15 µm, de préférence supérieure à 20 µm et plus préférablement supérieure à 25 µm.

15. Procédé selon l'une quelconque des revendications 1 à 14, **caractérisé en ce que** l'article moulé par pressage est en outre carbonaté en le mettant en contact avec un autre gaz qui contient au moins 1 % en volume de dioxyde de carbone.

16. Procédé selon la revendication 15, **caractérisé en ce que** ledit autre gaz contient au moins 3 % en volume, de préférence au moins 5 % en volume et plus préférentiellement au moins 7 % en volume de dioxyde de carbone.

17. Procédé selon la revendication 15 ou 16, **caractérisé en ce que** l'article moulé par pressage est en outre carbonaté avec ledit autre gaz pendant une période d'au moins 5 minutes, de préférence pendant une période d'au moins 15 minutes et plus préférablement pendant une période d'au moins 25 minutes.
